# EUROPEAN PATENT SPECIFICATION

(11) **EP 3 219 681 B1**
(45) Date of publication and mention of the grant of the patent: **31.07.2019**
(21) Application number: 17160342.6
(22) Date of filing: 10.03.2017
(51) Int. Cl.: C03B 29/08, C03B 27/044, C03B 23/033, C03B 35/14, C03B 35/16, C03B 23/023

(54) **METHOD AND DEVICE FOR BENDING AND TEMPERING A GLASS SHEET**
VERFAHREN UND VORRICHTUNG ZUM BIEGEN UND VORSPANNEN EINER GLASPLATTE
PROCÉDÉ ET DISPOSITIF PERMETTANT DE CINTRER ET DE TREMPER UNE FEUILLE DE VERRE

(30) Priority: 18.03.2016 FI 20165222
(43) Date of publication of application: 20.09.2017
(73) Proprietor: Glaston Finland Oy, 33730 Tampere (FI)
(72) Inventor: Pete, HARJUNEN, 37120 Nokia (FI); Pekka, HAKANEN, 33980 Pirkkala (FI)
(74) Representative: Ollikainen, Rauno Johannes

(56) References cited:
- JP-A- 2000 327 351
- US-A- 4 297 118
- US-A- 4 441 907
- US-A- 5 443 609
- US-A1- 2003 106 340
- US-A1- 2015 121 964

## Description

The invention relates to a method for bending and tempering a glass sheet, the method comprising:
- heating a flat glass sheet in a furnace supported by rollers for the purpose of bending and tempering,
- initiating the transfer step of the glass sheet by transferring the glass sheet onto the transfer conveyor by activating the transport platform of the transfer conveyor,
- transferring the flat glass sheet by the transfer conveyor from the furnace onto the bending conveyor, when the bending conveyor is straightened,
- bending the bending conveyor and the glass sheet to the desired curvature,
- cooling the glass sheet by air blasts, when the bending conveyor and the glass sheet are at the desired curvature.

The invention also relates to a device for bending and tempering a glass sheet, the device including:
- a furnace for heating the glass sheets to the bending temperature, the furnace including rollers,
- a bending conveyor for bending the glass sheets, the bending conveyor including conveyor rollers, means for bending the bending conveyor to a curvature corresponding to the desired curvature of the glass sheet and means for cooling the glass sheet for tempering.

A method and device of this type is known, for example, from patent publication JP 2000 - 327351.

A method and device of this type is known, for example, from patent publication FI95236. In this known device, the bender is downstream from the furnace, and the glass sheet is transferred from the furnace to the bender by means of the conveyor rollers of the furnace and the bender.

These conveyor rollers all have the same direction of movement of the glass sheet. A disadvantage is created by the cooling of the front end of the glass sheet during above said transfer. Above, the front end of the glass sheet is the section at its edge on the side of its direction of transfer. The glass sheet cools by itself as it is transferred from the hot furnace onto the cold bender. Thus, for the front end of the glass in particular, the actual bending and tempering temperature is significantly lower than the final temperature of the glass sheet in the furnace, and not equal to the temperature of the rear end of the glass sheet. In practice, above said cooling limits the maximum length of a glass sheet to be bent and tempered because the cooling time of the front end of the glass sheet increases according to the length of the glass sheet. As the front end of the glass sheet cools during above said transfer below an adequate bending temperature, its bending will no longer succeed. As the front end of the glass sheet cools during above said transfer and bending below an adequate tempering temperature, its tempering will no longer succeed.

One way to obviate above said disadvantage, i.e. the front end of the glass sheet cooling below an adequate bending and/or tempering temperature, is overheating the glass in the furnace before transfer to well above the adequate bending and tempering temperature. In this case, as a disadvantage arises a weakening quality of the glass sheet. Increase of the final temperature of the heating emphasizes traces and indentations left by the contact of the glass sheet with the conveyor rollers, as well as tempering tension differences. In practice, overheating is a possible solution for a device according to patent publication FI95236 for a glass sheet up to approximately 5 metres in length.

Another way to obviate above said disadvantage is heating the glass sheet, and in particular its front end, outside the furnace during transfer from the furnace to the bender. This heating is implemented by heating resistors added to the bender. The applicant is not assured of the success of this solution. With this solution, there is also doubt regarding the durability of the structures of the bender against the localized heating by resistors. The solution is also poor in terms of energy efficiency.

A third solution would be to build a furnace so wide that the glass sheet could be transferred into the bender with its longer side in front. In this case, the transfer time would be defined according to the shorter side of the glass sheet, i.e. it would be shorter. In current solutions, the maximum heating width of the furnace, i.e. the maximum width of a glass in the furnace, is 3.3 m. In this case as well, a standard-size flat glass sheet produced by a flat glass sheet factory (a so-called jumbo sheet 3.21 x 6 m in size) will fit into the furnace. The diameter of the rollers, on which the glass sheet is supported in the furnace, increases as the length of the roller increases, and as the diameter of the roller increases, the rollers can no longer be fit as densely into the furnace, i.e. the horizontal distance between the centre lines of adjacent rollers (=roller spacing) increases. In terms of the quality of the glass sheet, a denser spacing of the rollers is advantageous. The length of the roller has its strength-based limits, unless it is supported from the middle in addition to from its ends. Now, supporting from the middle would mean that the bearings should withstand a 700°C temperature. Further, the joint created by supporting from the middle would be problematic in terms of the quality of the glass sheet. Taking technical and economic matters into consideration, for example, a 6 m wide furnace is, in practice, an impossible requirement, or at least difficult to implement cost-effectively.

The object of the invention is to obviate above said disadvantage in a new way, and to provide the bend-tempering of ever-larger glass sheets while achieving good glass quality.

This object is achieved by a method presented in the accompanying claim 1. The object is also achieved by a device presented in the accompanying claim 5. Preferred embodiments of the invention are presented in the dependent claims.

In the following, one embodiment example of the invention is described in more detail by means of reference to the accompanying figures, in which:
- Fig. 1: shows diagrammatically a device according to the invention as seen from above,
- Fig. 2: shows a transfer and bending conveyor transferring a glass to the bending conveyor,
- Fig. 3: shows a bending conveyor as bent to the desired radius of curvature,
- Figs. 4 and 5: show a structure of the transfer conveyor between the furnace and the bending conveyor,
- Fig. 6: shows an alternative structure of the intermediate support of the conveyor section of the transfer conveyor,
- Figs. 7A and 7B: show diagrammatically the transfer speed of the glass sheet during transfer, and
- Fig. 8: shows an estimation of how a 6 mm thick glass cools outside the furnace during transfer to the bending conveyor.

A device according to the invention includes a loading conveyor 1, from which the glass sheet G is transferred into the furnace 2, in which the glass sheet is heated to the bending temperature. The furnace 2 is equipped with rollers 8, which move the glass sheet in direction x (= the longitudinal direction of the furnace) and in its opposite direction -x. The glass sheet thus moves back and forth in the longitudinal section L1 of the furnace 2 during heating, until it moves into the longitudinal section L2 of the furnace 2.

The furnace 2 is equipped with a transfer conveyor 3, which is activated as the glass sheet G arrives in its entirety from the longitudinal section L1 of the furnace 2 at the transfer point L3 inside the longitudinal section L2 of the furnace 2. As the transfer conveyor 3 activates, it moves the glass sheet G in direction z (=the latitudinal direction of the furnace 2) from the furnace 2 onto the bending conveyor 4. The direction z is preferably perpendicularly transverse in relation to the direction x. Once the glass sheet G in its entirety has reached the bending conveyor 4, the bending conveyor 4 bends the glass sheet G to the desired curvature. The blast cooling means 10, with which the bending conveyor 4 is equipped, are activated immediately once the glass sheet G reaches the desired radius of curvature and cool the glass sheet therein to achieve tempering. The efficiency of the tempering cooling in the bending conveyor 4 at the rollers 9 of the bending conveyor is not equal to that at the blast cooling means 10. The bending conveyor 4 moves the glass sheet G back and forth (in direction z) during tempering in order that the difference in tempering cooling efficiency caused by the location of the rollers 9 of the bending conveyor and the blast cooling means 10 would not be visible as localized tension differences in the tempered glass sheet. Once the glass sheet G has cooled enough, cooling blowing ceases and the bending conveyor 4 straightens. The bent and tempered glass sheet G moves away from the bending conveyor 4 onto the unloading conveyor 5.

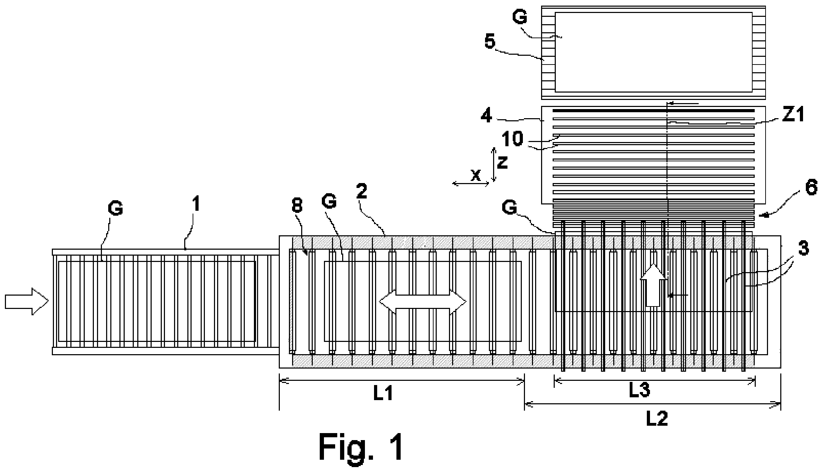

In Fig. 1, one glass sheet G is waiting stationary on the loading conveyor 1, one glass sheet G is moving back and forth in the longitudinal section L1 of the furnace 2 and one glass sheet G is just being transferred from the furnace 2 onto the bending conveyor 4 by means of the transfer conveyor 3.

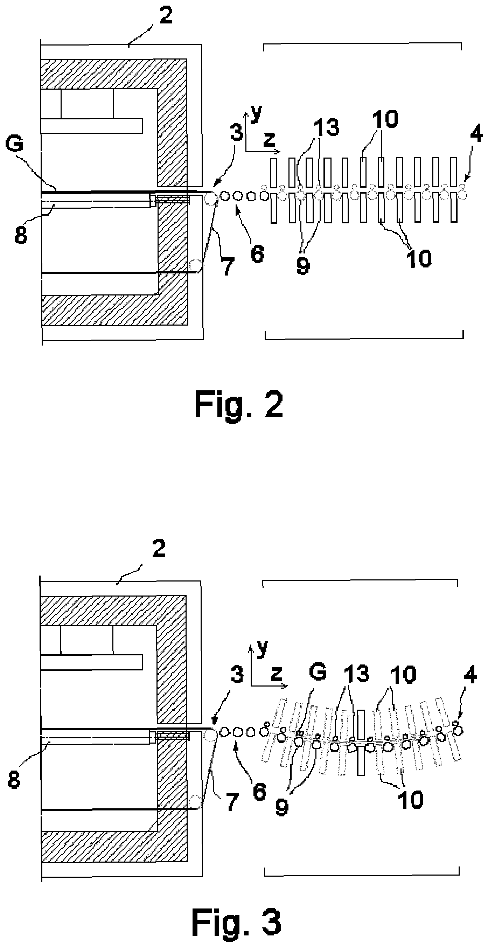

Fig. 2 is a cross-section of Fig. 1 along the line z1. Therein, the transport platform of the transfer conveyor 3 is slightly higher than the vertex of the rollers 8 of the furnace 2 in order that the glass sheet G does not rub against the rollers as it transfers in direction z. Before activating into transfer, the transport platform of the transfer conveyor 3 is between the rollers 8 of the furnace 2, at a level below their vertex (preferably 2-20 mm). From here, the transport platform of the transfer conveyor 3 rises (in direction y) slightly (preferably 2-20 mm) higher than the vertex of the rollers before transfer of the glass sheet (in direction z) from the furnace 2 to the bending conveyor 4 begins. Once the transport platform of the transfer conveyor 3 has performed the transfer, it lowers back to a level below the vertex of the rollers 8 of the furnace 3 to await a new transfer. During transfer, the transfer speed of the transfer conveyor 3, i.e. the peripheral speed of its belt 7, is equal to the peripheral speed of the conveyor rollers 9 of the bending conveyor 4. In Fig. 2, the bending conveyor 4 is straightened receiving the glass sheet G and blowing from the blast cooling means 10 towards the glass sheet G is prevented.

In Figs. 1 - 3, between the transfer conveyor 3 and the bending conveyor 4 there is an intermediate conveyor 6. The intermediate conveyor 6 is needed in order that the bending conveyor 4 has room to bend, for example, without striking the furnace 2 or the transfer conveyor 3. In Fig. 1, the intermediate conveyor 6 consists of three rollers. During transfer, the peripheral speed of the rollers of the intermediate conveyor 6 is equal to the peripheral speed of the belt 7 of the transfer conveyor 3. The rollers of the intermediate conveyor 6 can be heated by resistors (not shown in the figures), wherein cooling of the glass during transfer further decreases.

Once the glass sheet G arrives in its entirety at the bending conveyor 4, the bending conveyor 4 bends the glass sheet G to the desired curvature, as in Fig. 3. During bending, the glass sheet G is between the conveyor rollers 9 and the press rollers 13. Bending is performed by adjusting the relative position in height of the conveyor rollers 9. Such a bending conveyor is known, for example, from patent publication FI95236. Blowing from the blast cooling means 10 towards the glass sheet begins immediately after the bending step.

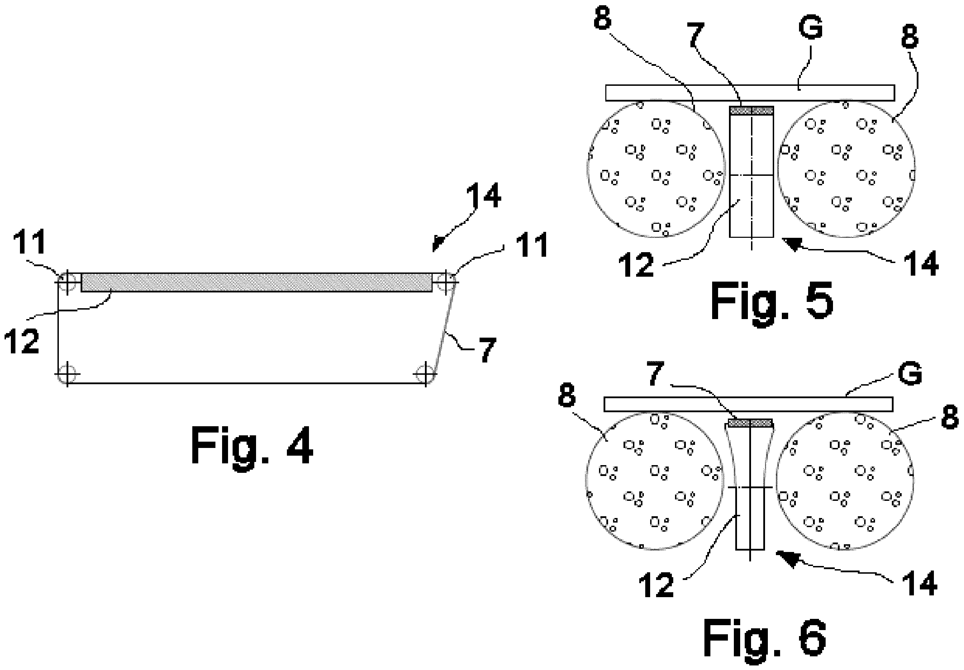

Fig. 4 shows one conveyor section 14 of the transfer conveyor 3. At each end of the conveyor section 14 of the transfer conveyor is a bearing-mounted pulley 11, one of which is rotated by an electric motor (the transfer conveyor 3 in Fig. 4 also has a lower set of pulleys). As the belt 7 travels between the pulleys, it is supported by an intermediate support 12, against which it therefore rubs as it moves. Both pulleys 11 along with their bearings are outside the furnace. The belt 7 is thus also partially outside the furnace, and while it is located there, it cools. The belt 7 does not move when waiting for a glass sheet. In this case, that section of the length of the belt that touches the lower surface of the glass sheet is always at approximately the same temperature as the furnace, the temperature of which is typically only 0-20°C higher than that of the glass sheet. In this case, the touch of the belt 7 to the glass sheet does not form in the glass sheet a significant localized change in temperature that would interfere with bending or tempering or would be visible as a quality fault in the finished tempered glass sheet. The belt 7 can move both clockwise and counter-clockwise. For example, the same section of the length of the belt 7, which the transferred glass sheet last touched, can return to receive also the next glass sheet. The length of the belt 7 increases as its temperature rises, thus for each belt 7 a controller is required, which maintains a constant tightness for the belt. This controller is not seen in the figures.

In Fig. 5, one conveyor section 14 of the transfer conveyor 3 is between the rollers 8 of the furnace 2. In each roller gap, on the length range of the furnace defined by the maximum length (x-direction) of the glass sheet, there is one conveyor section 14. Thus, the number and density of support lines (conveyor sections 14) below the glass sheet are at the maximum. During transfer step, it is advantageous that there is a greater density of support lines as into the glass sheet can be formed during transfer step undesired deflections as it creeps downwards at its section between the support lines. The larger the distance between adjacent support lines, the greater the possibility for these deflections. As this distance decreases, the contact pressure between the belt 7 and the glass sheet also decreases, which decreases the risk of quality faults of the glass sheet at the contact points.

At the narrowest point between the rollers 8, there is typically only approximately 25 mm of space. In Fig. 5, the width of the intermediate support 12 of the conveyor section and the belt 7 of the transfer conveyor is smaller than the distance between the rollers at the narrowest point. In this case, the rollers 8 do not limit the vertical movement, which occurs upwards as the glass sheet is transferred onto the transfer conveyor 3 and downwards as the transfer conveyor 3 transfers the glass sheet to the bending conveyor 4.

By using a structure like that of Fig. 6, the rollers 8 limit above said vertical movement. On the other hand, by using a structure like that of Fig. 6, the belt 7 of the transfer conveyor can be wider, which decreases the contact pressure between the glass G and the belt 7 (contributes possibly to glass quality) and improves the durability of the belt 7. In Fig. 6, on the sides of the belt 7 of the intermediate support, there are shoulders, which prevent the belt from transferring away from its place. The belt 7 is preferably a braid composed of thin steel wires, flexing slightly under the glass sheet.

The part of the transfer conveyor 3, which touches the glass sheet G, can, in addition to the belt 7, also be a chain or roller track. A belt composed of braided steel is a more preferred solution than a chain because the touch of the glass sheet onto the chain is less even and inflexible, which can cause quality faults to the glass sheet. A belt 7 composed of braided steel is a more preferred solution than a roller track because, when a belt is used, the bearings of the transfer device can be disposed outside the furnace. The belt 7 can also be of some other material than braided steel.

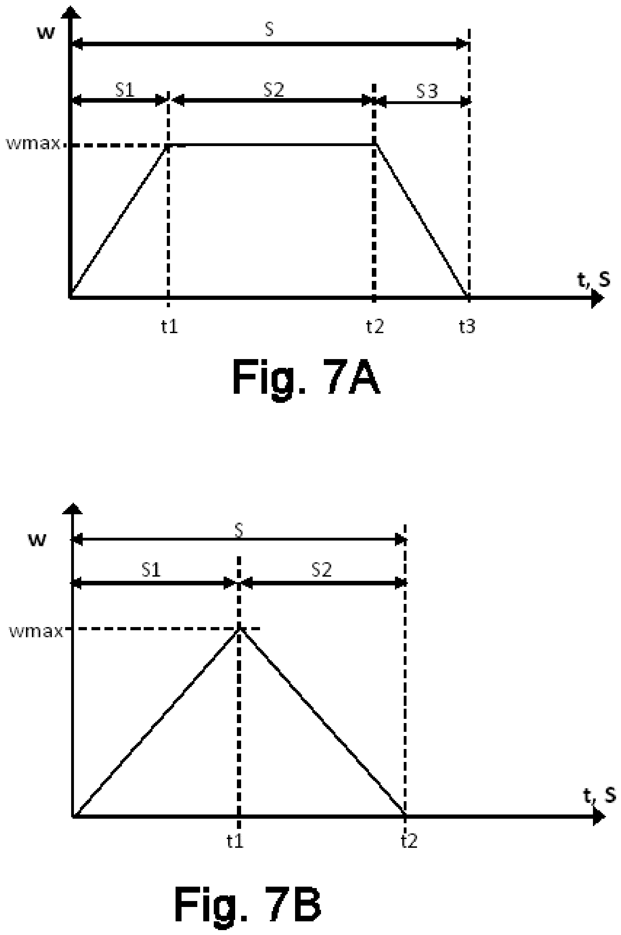

Figs. 7A and 7B show the transfer speed during transfer. In Fig 7A, in the case of curve A, the glass sheet is initially stationary. The transfer speed begins to increase with acceleration a. The transfer speed wmax is achieved after the time period t1. In this case, the glass sheet has advanced the distance S1 = 0.5at1^2. Deceleration is equal to the acceleration, thus t1 = t3 - t2 and S1 = S3. The glass sheet travels the distance S2 at constant transfer speed wmax and it takes t2 - t1 = (S - S1 - S3)/wmax. The entire transfer distance S is at its minimum the length of the glass sheet added to the distance from the furnace to the beginning of the bending conveyor. The transfer takes in its entirety t = t3.

In Fig. 7B, in the case of curve B, the glass sheet is initially stationary. The transfer speed begins to increase with acceleration a. The transfer speed wmax = at1 is achieved after the time period t1 = (2S1/a)^0.5. Now, the distance S1 = S2 = S/2. The transfer takes in its entirety t = t2 = 2t1.

The transfer time can thus also be decreased by increasing acceleration and transfer speed. Acceleration of the transfer speed is limited i.e. by friction between the roller and the glass sheet. Slippage between the glass sheet and the roller during transfer is not permitted in order that scratches would not be rubbed onto the surface of the glass sheet. To prevent slippage, as the maximum for acceleration/deceleration has been found approximately 0.3 ms^-2. Maximum transfer speed is limited i.e. by increasing vibration as the transfer speed of the rollers increases. The permitted extreme value for the transfer speed is typically 1 m/s. The transfer speed generally used is approximately 0.6 m/s.

The novelty of the invention is that the bending conveyor 4 is on the side of the furnace, i.e. the glass sheet G is transferred away from the furnace 2 in direction z, which is the transverse direction in relation to the direction of movement of the glass sheet x in the furnace 2. In order to enable this lateral movement, the furnace 2 must be equipped with a new kind of transfer conveyor 3.

In prior known solutions, the glass sheet transfers away from the furnace in direction x. In this case, if the glass sheet is, for example, 6 m long and 2 m wide, the distance from the furnace to the beginning of the bending conveyor is 0.5 m, the initial speed of the glass is 0, the acceleration /deceleration 0.3 ms^-2 and
- maximum transfer speed is limited to 0.6 m/s and the total transfer distance S is 6 + 0.5 m, transfer to the bending conveyor takes 12.83 seconds. In a method according to the invention, the total transfer distance S is 2 + 0.5 m and to transfer an equally large glass sheet takes 6.17 seconds. This example corresponds to the transfer according to Fig. 7A. o The invention thus decreases the transfer time by 6.66 s (52%).
- maximum transfer speed is not limited and the total transfer distance S is 6 + 0.5 m, transfer to the bending conveyor takes 9.31 seconds. In a method according to the invention, the total transfer distance S is 2 + 0.5 m and to transfer an equally large glass sheet takes 5.77 seconds. This example corresponds to the transfer according to Fig. 7B.
   o The invention thus decreases the transfer time by 3.54 s (38%). Simultaneously, the maximum transfer speed drops from 1.40 m/s to 0.87 m/s.

In the exemplary calculations above, the glass sheet stopped on the bending conveyor immediately once it was in its entirety inside the bending area. This is a preferred solution because, in this case, for example, the transfer time in the first example is (3.3 m -2 m) / 2 / 0.6 m/s = 1.08 s shorter than in the case, in which a 2 m wide glass would have been transferred up to the middle of a 3.3 m wide bending area.

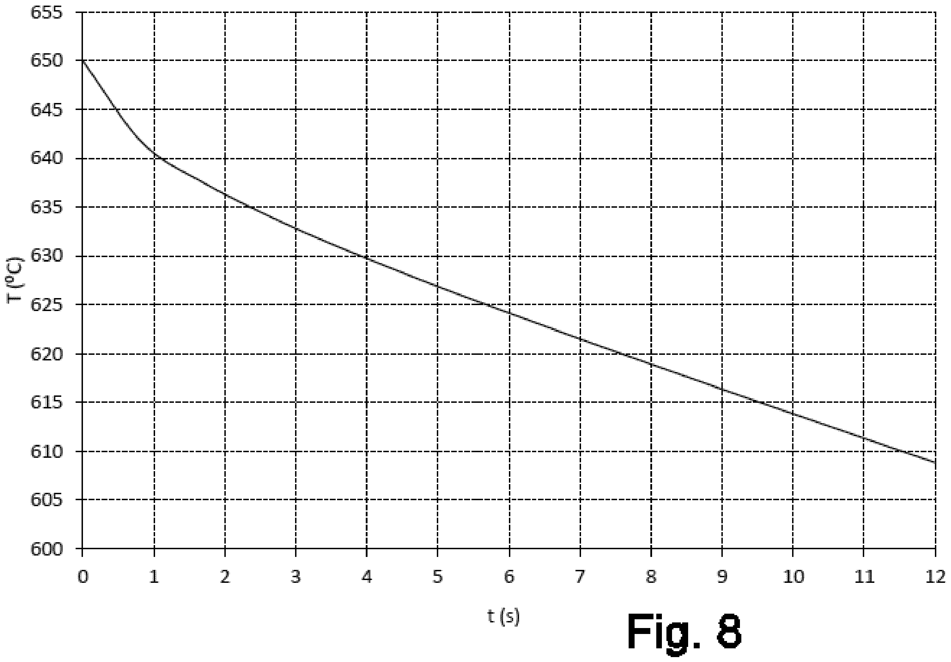

The invention thus substantially decreases the transfer time from the furnace to the bending conveyor, which decreases the cooling of the front end of the glass during transfer approximately as follows: according to the cooling curve of Fig. 8 (in which T is the surface temperature of the glass and t is the transfer time), the surface of the glass sheet cools from the temperature of 650°C in 5 seconds to the temperature of 627°C and in 13 seconds to the temperature of 607°C. Tempering of the glass sheet begins after transfer and bending, i.e. after approximately 2-3 s from the end of the transferring, which should also be considered in the cooling of the glass sheet. As tempering begins, the temperature of a 6 mm thick glass sheet should be at least 620°C throughout the entire area of the glass. As bending begins, it should be higher than this.

A device according to patent FI95236 has a glass sheet bending and tempering station including a roller conveyor, the relative position in height of which rollers is adjustable in order to curve the conveyor to a curvature corresponding to a desired degree of bending. The device includes upper and lower tempering boxes having nozzle openings for discharging air blasts towards the glass sheet to be tempered. The tempering boxes are to be moved to follow the curvature of the bender. Onto the upper tempering boxes are attached press rollers, which press the glass sheet against the rollers during bending. A more detailed description of the device is found in the patent in question. Such a device has been found better, i.e. for the quality of the glass sheet than other bending devices. Other bending devices are, for example, devices, in which bending is performed by bending the rollers of the bender, as in patent US6363753.

The invention further enables bending of a glass sheet, which is in its width and its length larger than the loading width of the furnace, to a curve in its shorter direction using a technique, in which the desired curvature of the glass sheet is formed by adjusting the relative position in height of the rollers of the bending conveyor, as, for example, in patent FI95236. This bending technique enables better quality for the glass sheet than bending techniques, in which the desired curvature of the glass sheet is formed by bending the rollers of the bending conveyor, as in patent US6363753.

The invention is not limited to the embodiment example presented above. The furnace can also be composed of separate furnaces or it can be so long that the glass sheet does not need to move back and forth in order to fill the heating time. The glass sheet can during heating move back and forth also in the section of the length of the furnace, from which transfer to the bender occurs. The bending conveyor and the transfer device can also be different. As the transfer step begins and ends, the rollers of the furnace can also move in the up-down direction, wherein the transfer device could remain stationary. The device can, in addition to the bending and tempering unit on the other side of the furnace, also be equipped with a tempering cooler to be installed downstream from the furnace (for example, in Fig. 1, to the same line with the loading table and furnace, immediately after the section of the length L2 of the furnace), which does not bend glass. In this case, the device can produce both bent and flat tempered glass sheet.

## Claims

1. A method for bending and tempering a glass sheet, the method comprising:
- heating a flat glass sheet (G) in a furnace (2) supported by rollers (8) for the purpose of bending and tempering,
- initiating the transfer step of the glass sheet (G) by transferring the glass sheet (G) onto the transfer conveyor (3) by activating the transport platform of the transfer conveyor (3),
- transferring the flat glass sheet (G) by the transfer conveyor (3) from the furnace (2) onto the bending conveyor (4), when the bending conveyor (4) is straightened,
- bending the bending conveyor (4) and the glass sheet (G) to the desired curvature,
- cooling the glass sheet (G) by air blasts, when the bending conveyor (4) and the glass sheet (G) are at the desired curvature,
**characterized in that** the transfer conveyor (3) transfers the flat glass sheet (G) away from the furnace (2) to the bending conveyor (4) in the longitudinal direction (z) of the rollers (8) of the furnace (2), which is the transverse direction in relation to the direction of movement (x) of the glass sheet in the furnace (2) during heating, and that said air blasting from the blast cooling means (10) is initiated in the bending conveyor (4) towards the glass sheet (G) of the desired curvature immediately once the glass sheet (G) has reached the desired curvature.

2. A method according to claim 1, **characterized in that** the desired curvature is formed by adjusting the relative position in height of the rollers of the bending conveyor (4).

3. A method according to claim 1, **characterized in that**, during transfer, the glass sheet is on a moving belt (7).

4. A method according to claim 1, **characterized in that** the conveyor sections (14) of the transfer conveyor (3) and thus also said transport platform are raised upwards at the beginning of the glass sheet transfer step before initiating the transfer movement of the glass sheet (G) in the longitudinal direction (z) of the rollers (8) of the furnace (2) away from the furnace.

5. A device for bending and tempering a glass sheet, the device including:
- a furnace (2) for heating the glass sheets (G) to the bending temperature, the furnace (2) including rollers (8),
- a bending conveyor (4) for bending the glass sheets, the bending conveyor (4) including conveyor rollers (9), means for bending the bending conveyor (4) to a curvature corresponding to the desired curvature of the glass sheet, and means (10) for cooling the glass sheet for tempering,
**characterized in that** the device includes a transfer conveyor (3), in which the transfer direction of a flat glass sheet away from the furnace (2) to the bending conveyor (4) is the longitudinal direction of the rollers (8) of the furnace, i.e. the transverse direction in relation to the direction of movement of the glass sheet in the furnace (2) during heating.

6. A device according to claim 5, **characterized in that** the relative position in height of the rollers (9) of the bending conveyor (4) is adjustable in order to curve the bending conveyor to a curvature corresponding to a desired degree of bending.

7. A device according to claim 5 or 6, **characterized in that** belts (7) are arranged to move the glass sheet in the transfer conveyor (3).

8. A device according to claim 7, **characterized in that** the belts (7) are made of steel wire.

9. A device according to claim 5, **characterized in that** one conveyor section (14) of the transfer conveyor is disposed at the transfer point (L3) between each gap of the rollers (8) of the furnace (2).

## Patentansprüche

1. Verfahren zum Biegen und Härten einer Glasplatte, wobei das Verfahren umfasst:
- Erwärmen einer ebenen Glasplatte (G) in einem Ofen (2), die durch Walzen (8) für den Zweck des Biegens und Härtens abgestützt wird,
- Auslösen des Übertragungsschritts der Glasplatte (G) durch Übertragen der Glasplatte (G) auf den Übergabeförderer (3) durch Aktivieren der Transportplattform des Übergabeförderers (3),
- Übertragen der ebenen Glasplatte (G) durch den Übergabeförderer (3) vom Ofen (2) auf das Biegeförderband (4), wenn das Biegeförderband (4) gestreckt ist,
- Biegen des Biegeförderbandes (4) und der Glasplatte (G) auf die gewünschte Krümmung,
- Kühlen der Glasplatte (G) durch Luftstöße, wenn das Biegeförderband (4) und die Glasplatte (G) die gewünschte Krümmung haben,
**dadurch gekennzeichnet, dass** der Übergabeförderer (3) die flache Glasplatte (G) weg vom Ofen (2) zum Biegeförderband (4) in der Längsrichtung (z) der Walzen (8) des Ofens (2) transportiert, welches die Querrichtung in Bezug auf die Richtung der Bewegung (x) der Glasplatte im Ofen (2) während der Erwärmung ist, und dass das Luftstrahlen vom Strahlkühlmittel (10) im Biegeförderband (4) in Richtung zur Glasplatte (G) der gewünschten Krümmung sofort ausgelöst wird, sobald die Glasplatte (G) die gewünschte Krümmung erreicht hat.

2. Verfahren nach Anspruch 1, **dadurch gekennzeichnet, dass** die gewünschte Krümmung durch Einstellen der relativen Position in der Höhe der Walzen des Biegeförderbandes (4) gebildet wird.

3. Verfahren nach Anspruch 1, **dadurch gekennzeichnet, dass** während des Transportes die Glasplatte sich auf einem Förderband (7) befindet.

4. Verfahren nach Anspruch 1, **dadurch gekennzeichnet, dass** die Transportabschnitte (14) des Übergabeförderers (3) und daher auch die Transportplattform zu Beginn des Glasplatten-Übertragungsschritts vor dem Auslösen der Transportbewegung der Glasplatte (G) in der Längsrichtung (z) der Walzen (8) des Ofens (2) weg vom Ofen angehoben werden.

5. Vorrichtung zum Biegen und Härten einer Glasplatte, wobei die Vorrichtung umfasst:
- einen Ofen (2) zum Erwärmen der Glasplatten (G) auf die Biegetemperatur, wobei der Ofen (2) Walzen (8) aufweist,
- ein Biegeförderband (4) zum Biegen der Glasplatten, wobei das Biegeförderband (4) Transportwalzen (9), Mittel zum Biegen des Biegeförderbandes (4) auf eine Krümmung, die der gewünschten Krümmung der Glasplatte entspricht, und Mittel (10) zum Kühlen der Glasplatte zum Härten enthält,
**dadurch gekennzeichnet, dass** die Vorrichtung einen Übergabeförderer (3) umfasst, bei dem die Transportrichtung einer flachen Glasplatte weg vom Ofen (2) zum Biegeförderband (4) die Längsrichtung der Walzen (8) des Ofens ist, d. h. die Querrichtung in Bezug auf die Bewegungsrichtung der Glasplatte im Ofen (2) während des Erwärmens.

6. Vorrichtung nach Anspruch 5, **dadurch gekennzeichnet, dass** die relative Position in der Höhe der Walzen (9) des Biegeförderbandes (4) einstellbar ist, um das Biegeförderband auf eine Krümmung zu biegen, die einem gewünschten Biegegrad entspricht.

7. Vorrichtung nach Anspruch 5 oder 6, **dadurch gekennzeichnet, dass** Gurte (7) dafür ausgelegt sind, die Glasplatte im Übergabeförderer (3) zu bewegen.

8. Vorrichtung nach Anspruch 7, **dadurch gekennzeichnet, dass** die Gurte (7) aus Stahldraht hergestellt sind.

9. Vorrichtung nach Anspruch 5, **dadurch gekennzeichnet, dass** ein Transportabschnitt (14) des Übergabeförderers am Übergabepunkt (L3) zwischen jedem Spalt der Walzen (8) des Ofens (2) angeordnet ist.

## Revendications

1. Procédé de cintrage et de trempe d'une feuille de verre, ce procédé comprenant :
- le chauffage d'une feuille de verre plat (G) dans un four (2) supporté par des rouleaux (8) aux fins de cintrage et de trempe,
- l'initiation de l'étape de transfert de la feuille de verre (G) en transférant la feuille de verre (G) sur le convoyeur de transfert (3) en activant la plate-forme de transport du convoyeur de transfert (3),
- le transfert de la feuille de verre plat (G) par le convoyeur de transfert (3) depuis le four (2) sur le convoyeur de cintrage (4) une fois que le convoyeur de cintrage (4) est redressé,
- le cintrage du convoyeur de cintrage (4) et de la feuille de verre (G) à la courbure souhaitée,
- le refroidissement de la feuille de verre (G) par soufflage d'air une fois que le convoyeur de cintrage (4) et la feuille de verre (G) ont la courbure souhaitée,
**caractérisé en ce que** le convoyeur de transfert (3) transfère la feuille de verre plat (G) depuis le four (2) sur le convoyeur de cintrage (4) dans le sens longitudinal (z) des rouleaux (8) du four (2), qui est le sens transversal par rapport au sens de mouvement (x) de la feuille de verre dans le four (2) pendant le chauffage, et que ledit soufflage d'air depuis le moyen de refroidissement par soufflage (10) est initié dans le convoyeur de cintrage (4) vers la feuille de verre (G) de courbure souhaitée dès que la feuille de verre (G) a atteint la courbure souhaitée.

2. Procédé selon la revendication 1, **caractérisé en ce que** la courbure souhaitée est formée en ajustant la position relative en hauteur des rouleaux du convoyeur de cintrage (4).

3. Procédé selon la revendication 1, **caractérisé en ce que**, pendant le transfert, la feuille de verre repose sur une courroie en mouvement (7).

4. Procédé selon la revendication 1, **caractérisé en ce que** les sections de convoyage (24) du convoyeur de transfert (3) et donc également ladite plate-forme de transport sont levées au début de l'étape de transfert de la feuille de verre avant d'initier le mouvement de transport de la feuille de verre (G) dans le sens longitudinal (z) des rouleaux (8) du four (2) en partant du four.

5. Dispositif de cintrage et de trempe d'une feuille de verre, ce procédé comprenant :
- un four (2) pour chauffer les feuilles de verre (G) à la température de cintrage, le four (2) comportant des rouleaux (8),
- un convoyeur de transfert (3) pour cintrer les feuilles de verre, le convoyeur de cintrage (4) comportant des rouleaux de convoyeur (9), un moyen de cintrage du convoyeur de cintrage (4) à une courbure correspondant à la courbure souhaitée de la feuille de verre, et un moyen (10) pour refroidir la feuille de verre pour la trempe,
**caractérisé en ce que** le dispositif comporte un convoyeur de transfert (3) dans lequel le sens de transfert d'une feuille de verre plat depuis le four (2) sur le convoyeur de cintrage (4) est le sens longitudinal des rouleaux (8) du four, c'est-à-dire le sens transversal par rapport au sens de mouvement de la feuille de verre dans le four (2) pendant le chauffage.

6. Dispositif selon la revendication 5, **caractérisé en ce que** la position relative en hauteur des rouleaux (9) du convoyeur de cintrage (4) est réglable afin de cintrer le convoyeur de cintrage à une courbure correspondant à un degré souhaité de courbure.

7. Dispositif selon la revendication 5 ou 6, **caractérisé en ce que** des courroies (7) sont disposées pour déplacer la feuille de verre dans le convoyeur de transfert (3).

8. Dispositif selon la revendication 7, **caractérisé en ce que** les courroies (7) sont composées de fil d'acier.

9. Dispositif selon la revendication 5, **caractérisé en ce qu'**une section de convoyeur (14) du convoyeur de transfert est disposée au point de transfert (L3) entre chaque intervalle entre les rouleaux (8) du four (2) .
